# EUROPÄISCHE PATENTSCHRIFT

(11) **EP 0 750 120 B1**
(45) Veröffentlichungstag und Bekanntmachung des Hinweises auf die Patenterteilung: **14.06.2000**
(21) Anmeldenummer: 95117566.0
(22) Anmeldetag: 08.11.1995
(51) Int. Cl.: F04D 29/60, F16G 11/12

(54) **Seilbefestigung einer Pumpenführung**
Fastening of cables for the guiding of pumps
Fixation de câbles de guidage de pompes

(30) Priorität: 19.06.1995 DE 19521764
(43) Veröffentlichungstag der Anmeldung: 27.12.1996
(73) Patentinhaber: WILO GmbH, D-44263 Dortmund (DE)
(72) Erfinder: Zelder, Manfred, D-53225 Bonn (DE)
(74) Vertreter: COHAUSZ HANNIG DAWIDOWICZ & PARTNER

(56) Entgegenhaltungen:
- EP-A- 0 080 982
- FR-A- 2 034 923
- US-A- 2 436 477

## Beschreibung

Die Erfindung betrifft eine Vorrichtung zum Befestigen der Enden eines oder zweier Führungsseile einer Pumpenführung, durch die eine Tauchmotorpumpe nach unten zu einem Pumpenfuß herabgelassen werden kann, wobei die Vorrichtung ein Spannteil zur Befestigung der zwei Seilenden umfaßt.

Abwasser-Tauchmotorpumpen werden in die Abwässerschächte an einer Kette hängend abgelassen und kuppeln sich am Schachtboden automatisch an das Druckrohr an. Dieses Druckrohr beginnt am sogenannten Pumpenfuß, der am Schachtboden befestigt ist. Die Pumpe ruht auf diesem Pumpenfuß und fördert das Abwasser in das dort beginnende Druckrohr.

Beim Ablassen der Pumpe benötigt sie eine Führung, die sie zu dem Pumpenfuß gleiten läßt und die automatische Ankupplung an das Druckrohr ermöglicht. Hierfür sind Führungsrohre und Drahtseilführungen bekannt. Rohre haben den Nachteil einer aufwendigen Montage. Weiterhin ist ihre Länge beim Verpacken und Versenden hinderlich.

Drahtseile sind kostengünstig, ganz besonders wenn Edelstahlaufrüstung verlangt wird; sie lassen sich zusammen mit der Pumpe aufgerollt auf ein- und derselben Palette verpacken und verschicken. Die Montage ist einfach, weil eine Befestigung an den Schachtwänden, wie dies bei Führungsrohren der Fall ist, entfällt. Das Rohr ist eigensteif, das Seil ist es nicht. Daher wird das Seil sowohl am Pumpenfuß als auch an der Decke des Pumpenschachtes befestigt und anschließend gespannt.

Bei derartigen, beispielsweise aus der FR-A-2034923 bekannten Lösungen hängen die Seile über das Spannteil oben an einer einzelnen senkrechten Schraube, die sich um ihre Achse drehen kann, so daß ein Einfädeln der Pumpe erschwert wird. Auch wird die Position der Seile bei einer Verdrehung des Spannteils um die senkrechte Achse verändert und somit eine fehlerfreie Ankoppelung der Pumpe erschwert oder sogar verhindert. Ferner werden die Seilenden beim Verpressen in der Spannvorrichtung verformt, so daß ein Nachsetzen vor Ort nur mit hohem manuellen Zeitaufwand möglich ist und damit entweder zu einer mangelhaften Installation führt, oder den Kostenvorteil der Drahtseilführung zunichte macht.

Aufgabe der Erfindung ist es, das Einfädeln der Führungsseile in den Seilspanner, das Fassen und Verklemmen der Seilenden, das Spannen des Seiles und das Nachspannen zu vereinfachen und vor allem das Verdrehen der beiden senkrechten Führungseile beim Spannen zu verhindern. Weiterhin soll die Ausführungsart es ermöglichen, die gewünschte Rostfreiheit kostengünstig herbeizuführen.

Diese Aufgabe wird erfindungsgemäß durch eine Vorrichtung nach Anspruch 1 gelöst. Wesentlich ist dabei, daß die Vorrichtung eine Halterung aufweist, an der das Spannteil um eine horizontale Achse verschwenkbar derart gehalten bzw. gelagert ist, daß beim Verschwenken die Seilspannung verändert wird, und daß Mittel zum Einstellen und Feststellen der Schwenkposition des Spannteils vorgesehen sind.

Eine solche Vorrichtung ermöglicht ein besonders einfaches Befestigen, Spannen, Nachspannen und Wechseln der Führungsseile. Die Konstruktion ist einfach in der Herstellung und Handhabung und von hoher Sicherheit. Die Abmessungen sind gering. Auf einfache Weise kann eine maximale Seilspannung entwickelt werden.

Vorzugsweise wird vorgeschlagen, daß die Mittel zum Einstellen und Feststellen der Schwenkposition des Spannteils mindestens eine Schraube und/oder eine auf einem Gewinde sitzende Mutter umfassen. Hierdurch kann das Spannteil auf besonders einfache Weise in verschiedene Positionen verstellt bzw. geschwenkt und in der jeweiligen Position festgestellt werden.

Auch kann das Spannteil eine erste insbesondere gekrümmte Platte aufweisen, die an der Halterung im unteren Bereich drehbar gelagert ist, und wobei an der ersten Platte von der Halterung wegweisend eine zweite Platte vorstehend befestigt ist, an der direkt oder über ein Zwischenteil die Kabelenden befestigt sind.

Besonders vorteilhaft ist es, wenn das Spannteil mindestens ein Langloch aufweist, durch die ein Gewindebolzen der Halterung hindurchragt, wobei auf dem Gewindebolzen mindestens eine Mutter außenseitig sitzt. Vorzugsweise wird vorgeschlagen, daß die Seilenden an dem Spannteil angeklemmt sind.

Eine besonders einfache und stabile Konstruktion wird erreicht, wenn das Spannteil vorne eine Querplatte oder ein Querprofil aufweist, an dessen zwei Enden die Seilenden lösbar befestigt insbesondere angeklemmt sind. Die Vorrichtung ist in ihrer Lage gegenüber der Wand höhenverstellbar, wenn die Halterung mindestens ein Langloch aufweist, durch das sie an der Wand oder Decke angeschraubt ist.

Besonders vorteilhaft ist es, wenn die Teile aus nicht rostendem Stahl insbesondere Stahlblech sind. Bisherige Lösungen arbeiten mit Seilspannern aus Grauguß. Die Abwasserbranche wünscht Edelstahl, um das starke Korrodieren in Abwasserschächten zu verhindern. Edelstahlguß ist zu teuer. Die vorliegene Konstruktion ist eine Leichtbauweise aus Edelstahlblech. Die gewählte Bauart zielt auf Gestaltung aus Blech und ermöglicht daher den Einsatz von Edelstahl geringer Masse und damit niedriger Kosten.

Ein Ausführungsbeispiel der Erfindung ist in der Zeichnung dargestellt und wird im folgenden näher beschrieben. Es zeigen:

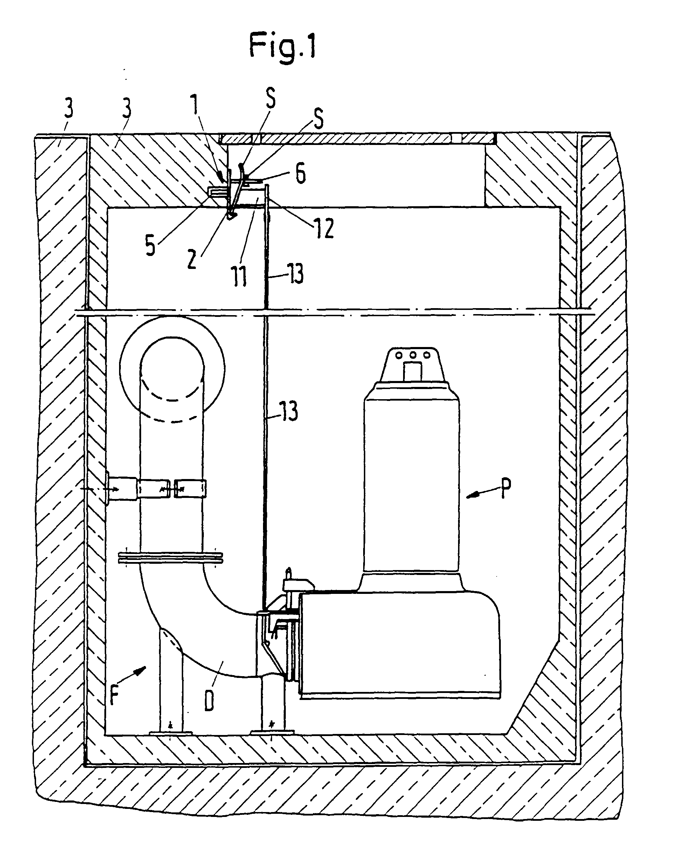

- Figur 1:: Einen senkrechten Schnitt durch einen Pumpenschacht.

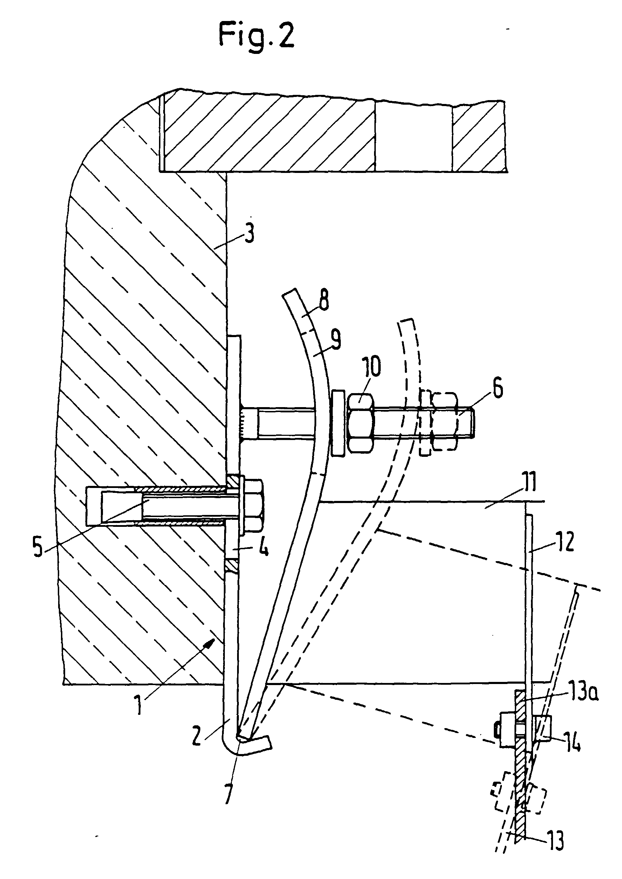

- Figur 2:: Einen Ausschnitt aus Figur 1.
- Figur 3:: Eine Seitenansicht des Spannteils.

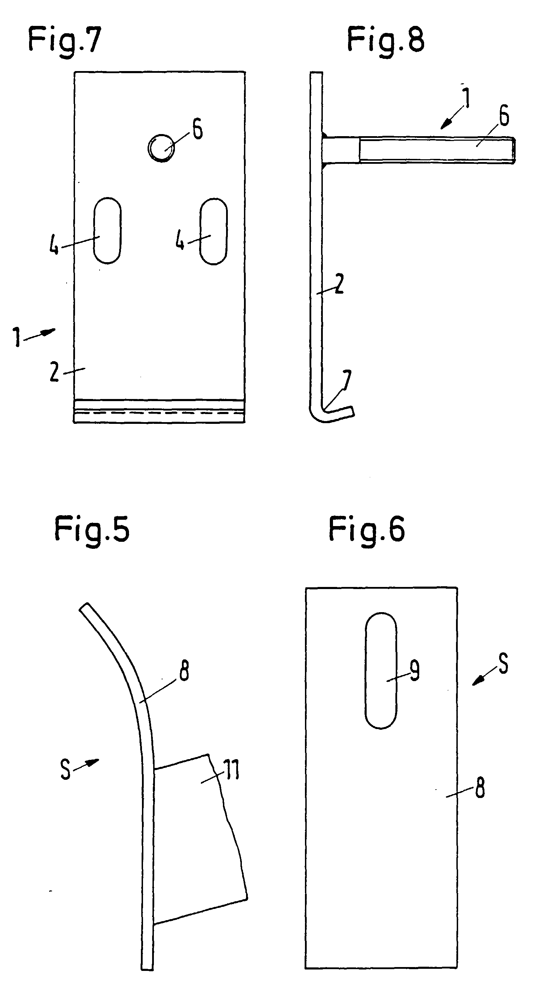

- Figur 4:: Eine Ansicht von oben auf das Spannteil mit befestigten Seilenden.
- Figur 5 und 6 :: Ansichten des Spannteils und
- Figur 7:: Ansichten der Halterung.

Die Befestigungs- und Spannvorrichtungen der Führungsseile 13 einer herablassbaren Tauchmotorpumpe P zu einem Pumpenfuß F mit Druckrohr D weist eine Halterung 1 auf, die eine senkrechte Platte 2 aus nicht rostendem Stahlblech besitzt, die oben an eine Wand 3 eines Pumpenschachtes angeschraubt ist. Hierfür hat die Platte 2 zwei senkrechte Langlöcher 4, durch die Schrauben 5 in die Wand eingedübelt sind. An der Platte steht waagerecht ein Gewindebolzen 6 vor, der in den Schacht oder in eine obere Schachtöffnung hineinragt. Das untere Ende der Platte 2 ist nach vorne abgebogen und bildet eine waagerechte Rinne 7 oder Nut.

In die Rinne 7 oder Nut ist die untere Kante einer Platte 8 aus nicht rostendem Stahlblech eingesetzt, die im oberen Bereich derart gekrümmt ist, daß die Außenseite konvex gebogen ist. Im oberen Bereich weist die Platte 8 ein senkrechtes Langloch 9 auf, das von dem Gewindebolzen 6 durchdrungen ist. Auf der Außenseite sitzt eine Mutter 10 auf, durch die die Platte 8 in ihrer Schwenkstellung verstellbar ist.

An der Plattenvorderseite ist eine zweite Platte 11 aus nicht rostendem Stahlblech rechtwinklig angeschweißt, deren Seitenflächen stets senkrecht sind und die nach vorne ragt. Am vorderen Ende der Platte 11 ist eine dritte Querplatte 12 aus nicht rostendem Stahlblbech angeschweißt, die die Platte 11 zu beiden Seiten weit überragt und an deren zwei Enden die zwei Seilenden 13 durch Schrauben 14 und Muttern angeklemmt sind. Der Abstand der Schrauben 14 an der Platte 12 entspricht dem Abstand der senkrechten Führungsseile voneinander. Statt einer Platte 12 kann auch waagerechtes Profil aus nicht rostendem Stahlblech an der Vorderseite der Platte 11 befestigt sein, um die Seilenden zu tragen.

Das aus den Teilen 8, 11 und 12 bestehende Spannteil S kann auch um eine materielle Achse verdrehbar bzw. an der Halterung 1 angelenkt sein.

Beide Seilenden 13 werden von nur einem einzigen Seil gebildet, das als Schlaufe unten um den Pumpfenuß F herumgeführt wird und mit den zwei Hälften der Schlaufe nach oben läuft. Es gibt also nur ein einziges Seilstück; hier wird bei den beiden parallel geführten Seilenden jedoch der Ausdruck "beide Seile" benutzt.

Die Voreinstellung des Seiles ist damit fixiert. Das stramme Vorspannen des Seiles erfolgt durch die Mutter 10. Dabei dreht sich Teil 8 in einem Quasi-Gelenk des Teiles 2. Eine weitere Voreinstellung, auch für ein späteres Nachsetzen der Seildehnung ist durch die Langlöcher 4 des Teiles 2 an der Wand möglich.

Die beiden parallel geführten Seile verbleiben in jedem Falle in ihrer vorgegebenen Ebene, sowohl beim Vorspannen, beim Spannen als auch beim Nachsetzen, da sich das Spannteil nicht verdrehen kann. Bekannte Lösungen lassen die Seilenden in einer Traverse enden, die wiederum an einer einzelnen senkrechten Schraube hängt, die sich frei drehen läßt, so daß sich beide Seilhälften um eine senkrechte Achse drehen können.

Die Drahtseile werden bei bekannten Führungseinrichtungen, die mit Drahtseilen arbeiten, verpreßt. Dabei werden beide Seilenden gleichzeitig verformt und können wegen der sperrigen Steifigkeit kurzer Drahtstücke nicht mehr für Korrekturen verwandt werden. Die vorliegende neue Lösung verklemmt nicht beide Seilenden gleichzeitig, sondern nacheinander. Das heißt, eines der Seilenden wird verklemmt und erst danach wird das zweite Seilende strammgezogen und verklemmt. Damit ist die Voreinstellung vollzogen. Das endgültige Spannen erfolgt nun durch die Mutter 10.

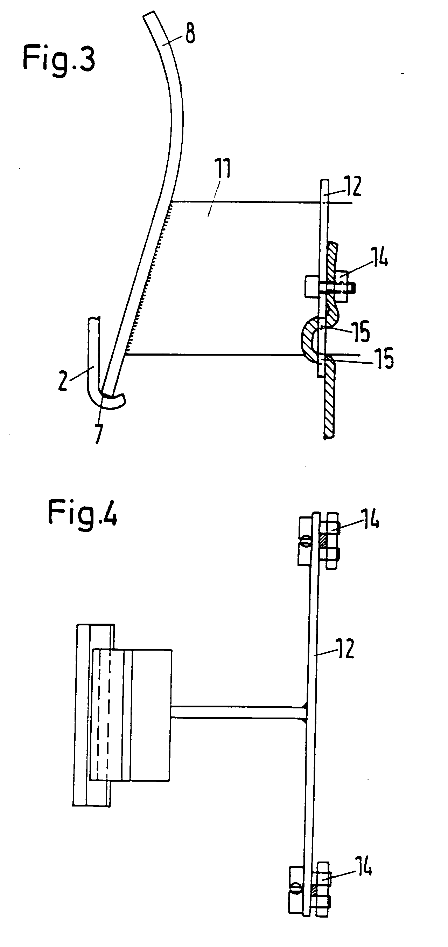

Wie in Figur 3 dargestellt, kann das Seilende 13a nicht nur angeschraubt sein, sondern auch durch Öffnungen 15 der Querplatte 12 gefädelt sein, um ein zusätzliches Verklemmmen zu erreichen.

## Patentansprüche

1. Vorrichtung zum Befestigen der Enden (13a) eines oder zweier Führungsseile (13) einer Pumpenführung, durch die eine Tauchmotorpumpe (P) nach unten zu einem Pumpenfuß (F) herabgelassen werden kann, wobei die Vorrichtung ein Spannteil (S) zur Befestigung der zwei Seilenden umfaßt,
**dadurch gekennzeichnet,**
daß die Vorrichtung eine Wand- oder Deckenhalterung (1) aufweist, an der das Spannteil (S) um eine horizontale und parallel zu den Befestigungspunkten der beiden Seilenden liegende Achse verschwenkbar derart gelagert ist, daß beim Verschwenken die Seilspannung verändert wird, und daß Mittel zum Einstellen und Feststellen der Schwenklage des Spannteils (S) vorgesehen sind.

2. Vorrichtung nach Anspruch 1, **dadurch gekennzeichnet,** daß das Spannteil (S) durch mindestens eine Schraube und/oder durch eine auf einem Gewinde sitzende Mutter (10) in seiner Schwenkstellung gegenüber der Halterung (1) verstellbar ist.

3. Vorrichtung nach Anspruch 2, **dadurch gekennzeichnet,** daß das erste Spannteil (S) eine erste insbesondere gekrümmte Platte (8) aufweist, die an der Halterung (1) im unteren Bereich drehbar gelagert ist, und daß an der ersten Platte (8) von der Halterung (1) wegweisend eine zweite Platte (11) vorstehend befestigt ist, an der direkt oder über ein Zwischenteil (12) die Kabelenden (13a) befestigt sind.

4. Vorrichtung nach Anspruch 3 oder 4, **dadurch gekennzeichnet,** daß das Spannteil (S) mindestens ein Langloch (9) aufweist, durch die ein Gewindebolzen (6) der Halterung (1) hindurchragt, wobei auf dem Gewindebolzen mindestens eine Mutter (10) außenseitig sitzt.

5. Vorrichtung nach einem der vorherigen Ansprüche,
**dadurch gekennzeichnet,** daß die Seilenden (13a) an dem Spannteil (S) angeklemmt sind.

6. Vorrichtung nach einem der vorherigen Ansprüche,
**dadurch gekennzeichnet,** daß das Spannteil (S) vorne eine Querplatte (12) oder ein Querprofil aufweist, an dessen zwei Enden die Seilenden (13a) lösbar befestigt insbesondere angeklemmt sind.

7. Vorrichtung nach einem der vorherigen Ansprüche,
**dadurch gekennzeichnet,** daß die Halterung (1) mindestens ein Langloch (4) aufweist, durch sie an der Wand (3) oder Decke angeschraubt ist.

8. Vorrichtung nach einem der vorherigen Ansprüche,
**dadurch gekennzeichnet,** daß die Teile (2, 8, 11, 12) aus nicht rostendem Stahl insbesondere Stahlblech sind.

## Claims

1. A device for the attachment of the ends (13a) of one or two guide cables (13) of a pump guide by which a submersible motor-driven pump (P) can be lowered to a pump base (F), the device comprising a tensioning part (S) for the attachment of the two cable ends,
**characterised in that**
the device is a wall-mounted or ceiling-mounted retaining means (1) on which the tensioning part (S) is so mounted pivotable around a horizontal axis and lying parallel with the attaching points of the two cable ends that during pivoting the cable tensioning is changed, means being provided for adjusting and fixing the pivoted position of the tensioning part (S).

2. A device according to claim 1,
**characterised in that**
the tensioning part (S) can be adjusted in its pivoted position in relation to the retaining means (1) by at least one screw and/or by a nut (10) disposed on a screwthreading.

3. A device according to claim 2,
**characterised in that**
the first tensioning part (S) has a first, more particularly curved plate (8) which is pivotably mounted on the retaining means (1) in the lower zone, and attached to the first plate (8) projecting and pointing away from the retaining means (1) is a second plate (11) to which the cable ends (13a) are attached directly or via an intermediate member (12).

4. A device according to claims 3 or 4,
**characterised in that**
the tensioning part (S) has at least one slot (9) through which a screwthreaded pin (6) of the retaining means (1) extends, at least one nut being disposed on the outside of the screwthreaded pin.

5. A device according to one of the preceding claims,
**characterised in that**
the cable ends (13a) are clamped to the tensioning part (S).

6. A device according to one of the preceding claims,
**characterised in that**
the tensioning part (S) has at the front a transverse plate (12) or a transverse section to whose two ends the cable ends (13a) are releasably attached, more particularly clamped.

7. A device according to one of the preceding claims,
**characterised in that**
the retaining means (1) has at least one slot (4) through which it is screwed to the wall (3) or ceiling.

8. A device according to one of the preceding claims,
**characterised in that**
the parts (2, 8, 11, 12) are made of stainless steel, more particularly steel sheet.

## Revendications

1. Dispositif de fixation des extrémités (13a) d'un ou deux câbles de guidage (13) d'un guidage de pompe, par lesquels une pompe à moteur submersible (P) peut être descendue vers le bas jusqu'à un pied de pompe (F), le dispositif comprenant une pièce de tension (S) pour la fixation des deux extrémités de câble,
caractérisé en ce que le dispositif présente une fixation (1) de paroi ou de couvercle sur laquelle la pièce de tension (S) est montée à pivotement autour d'un axe horizontal et parallèle aux points de fixation des deux extrémités de câble de telle manière que, lors d'un pivotement, la tension du câble est modifiée et que sont prévus des moyens pour régler et fixer la position de pivotement de la pièce de tension (S).

2. Dispositif selon la revendication 1,
caractérisé en ce que la pièce de tension (S) est réglable en position de pivotement par rapport à la fixation (1) par au moins une vis et/ou par un écrou (10) monté sur un filetage.

3. Dispositif selon la revendication 2,
caractérisé en ce que la première pièce de tension (S) présente une première plaque (8), en particulier courbée, qui est montée à pivotement dans la zone inférieure sur la fixation (1) et qu'une seconde plaque (11) est fixée en saillie sur la première plaque (8) en s'en écartant de la fixation (1), sur laquelle les extrémités (13a) de câble sont fixées directement ou par l'intermédiaire d'une pièce intermédiaire (12).

4. Dispositif selon la revendication 3 ou 4,
caractérisé en ce que la pièce de tension (S) présente au moins un trou oblong (9) à travers lequel fait saillie un boulon fileté (6) de la fixation (1), au moins un écrou (10) étant logé du côté extérieur sur le boulon fileté.

5. Dispositif selon l'une des revendications précédentes,
caractérisé en ce que les extrémités (13a) de câble sont serrées contre la pièce de tension (S).

6. Dispositif selon l'une des revendications précédentes,
caractérisé en ce que la pièce de tension (S) présente à l'avant une plaque transversale (12) ou un profil transversal aux deux extrémités duquel sont fixées de manière démontable, en particulier serrées, les extrémités (13a) de câble.

7. Dispositif selon l'une des revendications précédentes,
caractérisé en ce que la fixation (1) présente au moins un trou oblong (4) à travers lequel elle est vissée à la paroi (3) ou au couvercle.

8. Dispositif selon l'une des revendications précédentes,
caractérisé en ce que les pièces (2, 8, 11, 12) sont en acier inoxydable, en particulier en tôle d'acier.
